Europäisches Patentamt

(19) European Patent Office

Office européen des brevets

(11) Numéro de publication: **0 147 303**
**B1**

(12) **FASCICULE DE BREVET EUROPEEN**

(45) Date de publication du fascicule du brevet:
**22.03.89**

(21) Numéro de dépôt: **84402628.6**

(22) Date de dépôt: **18.12.84**

(51) Int. Cl.⁴: **G 01 N 15/02, G 01 N 1/24**

(54) Echantillonneur d'aérosols à impaction en cascade et a dépôt uniforme.

(30) Priorité: **23.12.83 FR 8320697**

(43) Date de publication de la demande:
**03.07.85 Bulletin 85/27**

(45) Mention de la délivrance du brevet:
**22.03.89 Bulletin 89/12**

(84) Etats contractants désignés:
**BE DE GB IT SE**

(56) Documents cités:
**US-A- 2 894 877**
**US-A- 3 693 457**
**US-A- 4 321 822**

(73) Titulaire: **COMMISSARIAT A L'ENERGIE ATOMIQUE,
31/33, rue de la Fédération, F-75015 Paris (FR)**

(72) Inventeur: **Burghoffer, Patrick, 4, rue du Parc,
F-77200 Lognes (FR)**
Inventeur: **Pourprix, Michel, 7, Allée des Maraîchers,
F-91310 Montlhery (FR)**
Inventeur: **Poussier, Patrick, 29, Avenue Paul Deroulède,
F-94300 Vincennes (FR)**

(74) Mandataire: **Mongrédien, André, c/o
BREVATOME 25, rue de Ponthieu, F-75008 Paris (FR)**

ACTORUM AG

## Description

L'invention concerne un dispositif d'analyse granulométrique d'aérosols par impaction en cascade à dépôt uniforme comportant une entrée d'air conique fixée sur une chambre cylindrique de révolution creuse et étanche constituée par la superposition de plusieurs étages en forme de cylindres creux parcourus par le courant d'air issu de l'entrée conique et comportant chacun une plaque circulaire percée de trous situés sur des cercles concentriques coaxiaux à ladite plaque et de diamètre identique diminuant progressivement à chaque étage, et un disque de collection situé en aval de la plaque percée de diamètre inférieur au diamètre interne de l'étage, comprenant des moyens pour assurer la circulation verticale descendante de l'air.

Le mode de fonctionnement de ce dispositif est basé sur la séparation granulométrique des aérosols en fonction de leur énergie cinétique, donc de leur inertie.

Selon l'art antérieur, un tel dispositif a pour objet la récupération d'une quantité d'aérosols suffisante pour avoir la sensibilité nécessaire à l'exploitation des résultats de de pesée, d'analyse chimique, de comptage de la radioactivité ou encore de fluorescence X... Parmi les dispositifs d'analyse granulométrique du type ci-dessus défini on connaît l'échantillonneur commercialisé par la société Andersen Samplers Inc. constitué d'un empilement d'étages cylindriques creux dans lesquels circule l'aérosol, comportant chacun une plaque percée de trous calibrés fixe et un disque de collection situé en aval de la plaque percée sur lequel se déposent les particules par inertie.

Dans un premier temps on a d'abord utilisé un dispositif du type précédent dont le disque de collection était fixe (voir document US-A-3 693 457): le dépôt recueilli alors sur le disque de collection était localisé à une surface très limitée correspondant sensiblement à la surface projetée des trous situés sur la plaque percée. Sur ce modèle sont apparus trois inconvénients principaux limitant la quantité d'aérosols à collecter: la modification des caractéristiques d'impaction d'un étage donné quand l'épaisseur du dépôt augmente, le réentraînement des aérosols d'un étage vers les étages inférieurs dans le cas d'une augmentation trop importante de l'épaisseur du dépôt, l'auto-absorption occasionnée par la superposition des particules dans le cas de comptage de la radioactivité α ou la détérioration du spectre d'émission des rayonnements.

Pour remédier aux principaux inconvénients ci-dessus cités un mode de collection consistant à déplacer les plaques de collection a déjà été envisagé (voir document US-A-2 894 877): le disque de collection tourne autour de son axe, lui-même confondu avec l'axe de symétrie de révolution de l'impacteur cylindrique. Dans ce cas, on observe sur les disques de collection des dépôts circulaires de particules de largeur sensiblement égale à la surface projetée des trous situés sur la plaque percée. Un tel dépôt réduit les inconvénients cités précédemment, sans toutefois les supprimer.

La présente invention a précisément pour objet un échantillonneur d'aérosols à impaction en cascade et à dépôt uniforme qui permet, par des moyens de mise en œuvre simples, de s'affranchir des inconvénients de l'art antérieur que l'on vient de rappeler.

Ce dispositif du type de ceux qui comportent de façon connue un cône d'admission d'air à embase cylindrique fixée sur une chambre cylindrique de révolution creuse et étanche constituée par la superposition de plusieurs étages en forme de cylindres de révolution creux parcourus par un courant d'air issu du cône d'admission et comportant chacun une plaque circulaire percée de trous, situés sur plusieurs cercles concentriques coaxiaux à ladite plaque et de diamètre identique diminuant progressivement à chaque étage. Un disque de collection est situé en aval de la plaque percée de diamètre inférieur au diamètre interne de la chambre de l'impacteur. Ce dispositif comportant des moyens pour assurer la circulation verticale descendante de l'air, se caractérise en ce qu'il comprend en outre des moyens pour réaliser la mise en rotation relative, identique à chaque étage, de chaque plaque percée par rapport au disque de collection correspondant, et en ce que l'axe du disque présente un excentrage par rapport à l'axe de la plaque circulaire percée.

Différents modes de mise en œuvre sont envisagés pour réaliser ledit excentrage.

Cet excentrage est tel que les dépôts de particules recueillies sur les disques de collection recouvrent de larges surfaces annulaires qui se juxtaposent deux à deux réalisant ainsi l'homogénéisation du dépôt sur pratiquement toute la surface du disque.

Les avantages de l'invention ci-dessus caractérisée consistent essentiellement en ce que le dépôt receueilli sur les disques de collection et issu de l'ensemble des trous situés sur une même circonférence coaxiale à l'axe de la plaque percée recouvre uniformément une surface annulaire plus importante que les surfaces de dépôt figurant dans l'art antérieur.

Sous réserve que deux cercles consécutifs constitués de trous identiquement calibrés soient suffisamment proches l'un de l'autre, les surfaces de dépôt annulaires relatives à chacun d'eux se juxtaposent; on réalise ainsi un dépôt uniforme de particules sur la totalité du disque de collection.

Les caractéristiques d'impaction d'un étage donné ne sont plus modifiées: en effet, du fait d'une épaisseur du dépôt sensiblement constante, la distance entre l'orifice et le point de collection ne varie pas; le réentraînement de l'aérosol d'un étage vers les étages inférieurs est de ce fait réduit; de même, le phénomène d'auto-absorption de particules (notamment de particules α dans les cas de comptage de la radioactivité α) est entravé par le fait que peu de particules se superposent.

Selon un premier mode de mise en œuvre de la présente invention le disque de collection excentré est fixé sur une plaque circulaire dentée de diamètre supérieur au diamètre du disque de collection comportant une évacuation de l'aérosol par des trous percés dans la partie de la plaque non recouverte par le disque de collection. Cette plaque, montée dans une gorge circulaire pratiquée à l'intérieur du corps cylindrique de chaque étage engrène sur deux pignons dont le premier, solidaire de l'extrémité inférieure d'une tige entraînée en rotation par un moteur, transmet le mouvement de rotation au second au moyen de deux ergots montés sur sa face externe qui viennent s'emboîter dans les deux orifices usinés sur la face externe du second pignon lui-même solidaire de l'extrémité supérieure d'une tige coaxiale et identique à la tige de l'étage précédent.

Selon un deuxième mode de mise en œuvre de la présente invention, chaque disque de collection correspondant à un étage donné, pivote autour de son axe sur une butée à billes mobile à l'intérieur d'une coupelle concentrique à la chambre cylindrique de l'impacteur et à la plaque percée, ladite coupelle étant supportée par un croisillon à plusieurs branches dont les extrémités sont emboîtées dans le corps cylindrique de l'impacteur.

Dans ce mode de mise en œuvre, chaque disque de collection, lesté avec une masselotte fixée à la périphérie de sa face inférieure est excentré par inclinaison de l'impacteur de sorte que le disque présente toujours sa masselotte au point le plus bas.

La mise en rotation du corps de l'impacteur à l'aide d'un moteur provoque à chaque étage la mise en rotation de la plaque percée, par rapport au disque de collection excentré et immobile.

Selon un troisième mode de mise en œuvre chaque disque de collection est monté sur une butée à billes, excentrée par rapport au corps de l'impacteur, qui pivote sur un support plan maintenu par un croisillon à plusieurs branches dont les extrémités sont emboîtées dans le corps cylindrique de l'impacteur.

Dans ce mode de mise en œuvre, chaque disque de collection est muni de masselottes magnétiques fixées à deux extrémités ou à proximité de deux extrémités diamétralement opposées du disque qui est entraîné en rotation sous l'action d'un champ magnétique extérieur tournant créé par exemple par une bobine magnétique située à l'extérieur de la chambre cylindrique de l'impacteur.

L'invention est exposée ci-après plus en détail à l'aide de dessins représentant l'excentrage ainsi que les trois modes d'exécution.

La figure 1 représente en vue de dessus et en coupe l'excentrage du disque de collection par rapport à la plaque percée (figure 1a-b) ainsi que la répartition du dépôt sur le disque de collection (figure 1a).

La figure 2 représente en coupe et en perspective le premier mode d'exécution comportant un système d'engrenages entraînant les disques de collection en rotation.

La figure 3 représente en coupe et en perspective le deuxième mode d'exécution comportant une butée à billes sur laquelle est monté le disque de collection lesté par une masselotte fixée à la périphérie de sa face aval.

La figure 4 représente en coupe le troisième mode d'exécution caractérisé par le montage de masselottes magnétiques à proximité de deux extrémités diamétralement opposées du disque de collection, et d'une bobine magnétique à l'extérieur de l'impacteur.

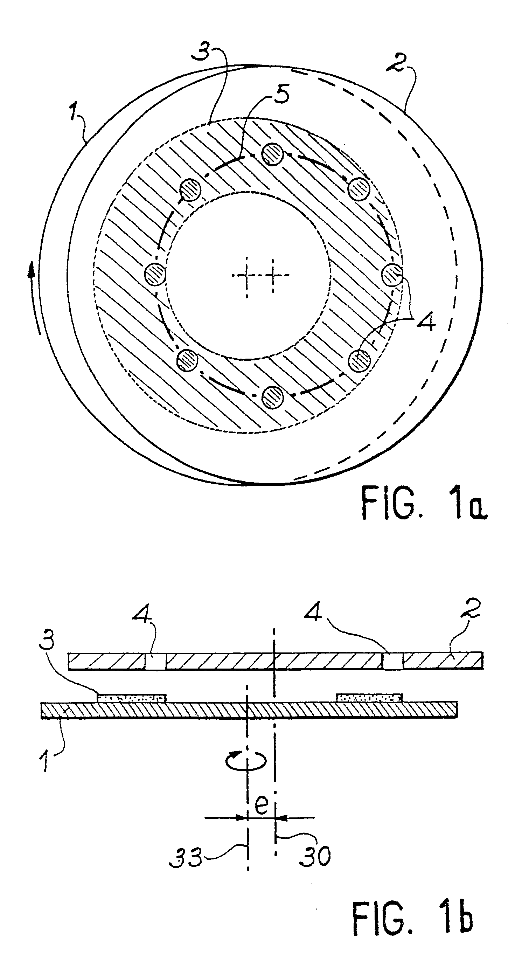

Comme indiqué plus haut, la présente invention exploite la mise en rotation du disque de collection 1 excentrée par rapport à la plaque circulaire percée 2 illustrée dans les cas de figures 1a et 1b. La zone hachurée 3 représente le dépôt de particules impactées sur le disque de collection 1, tournant selon la figure 1b sur son axe 33, après leur passage au travers des orifices identiquement calibrés 4 situés sur l'une des circonférences 5 coaxiales à l'axe 30 de la plaque percée 2. Cette zone 3 recouvre une surface annulaire de largeur sensiblement égale à deux fois l'excentricité e plus le diamètre de l'orifice 4. La juxtaposition de chaque surface annulaire 3 issue de chacun des trous 4 d'une même circonférence du type 5 conduit, en fixant correctement la distance entre deux circonférences du type 5, à l'homogénéisation du dépôt sur toute la surface du disque 1.

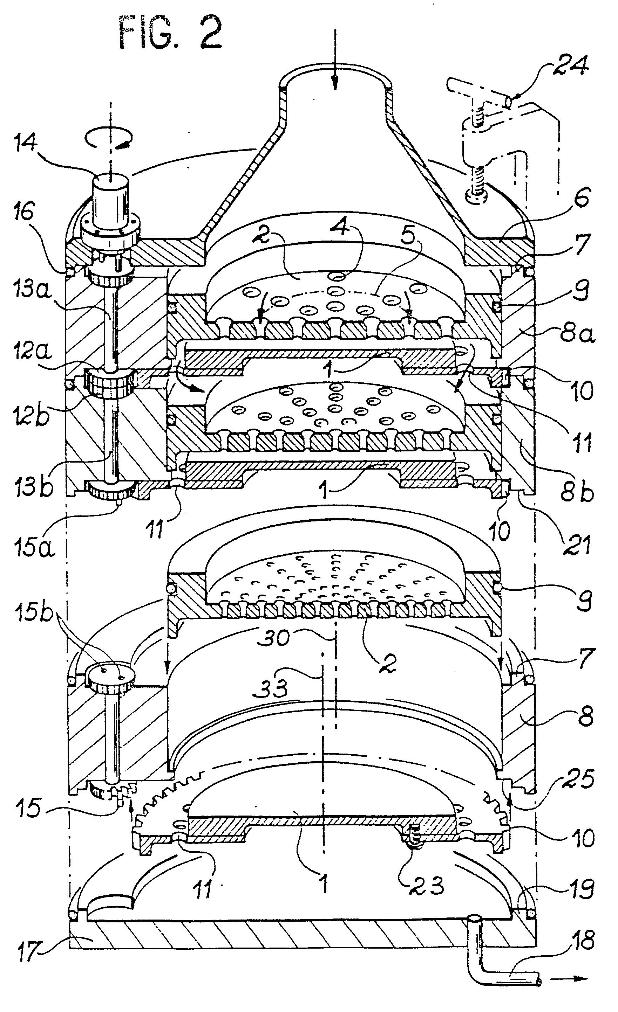

La figure 2 représente un impacteur à cascade comportant un cône d'admission de l'aérosol à embase cylindrique 6 venant se caler sur un embrèvement circulaire 7 situé sur la partie supérieure d'une chambre cylindrique de révolution creuse et étanche constituée par la superposition de plusieurs étages en forme de cylindres creux 8 de révolution parcourus par le courant d'aérosols issu du cône d'admission 6 et comportant chacun une plaque circulaire 2 percée de trous 4, situés sur des cercle 5 concentriques coaxiaux à ladite plaque et de diamètre identique diminuant progressivement à chaque étage, emboîtée de façon étanche par un joint torique 9 dans le corps cylindrique de l'étage 8 et un disque de collection 1 situé en aval de la plaque percée 2 de diamètre inférieur au diamètre interne du corps cylindrique de l'étage 8 sur lequel se déposent les particules par impaction.

Du fait de leur inertie, les particules les plus lourdes tombent sur le premier disque de collection 1, les autres particules s'écoulent tout autour du disque atteignant ainsi l'étage consécutif 8. Selon l'art connu, la catégorie dimensionnelle des particules recueillies à chaque étage dépend de la vitesse du jet à travers les orifices de l'étage considéré, de la distance entre le disque de collection 1 et desdits orifices 4, enfin des caractéristiques de collection de l'étage précédent. Par ailleurs, le maintien d'un débit constant dans l'impacteur à travers des orifices au diamètre de plus en plus réduit augmente la vitesse de l'air au fur et à mesure qu'il descend dans l'impacteur, ce qui conduit à l'impaction progressive de particules de plus en plus fines aux étages inférieurs; le dernier étage constitue un filtre à haute efficacité qui collecte l'ensemble des particules ultrafines non captées dans les étages précédents.

L'évacuation de l'air épuré est assurée par une canalisation 18 usinée dans le cylindre de base 17 à fond plat et dont la partie supérieure possède un embrèvement circulaire 19 sur lequel s'emboîte de façon étanche la partie inférieure du dernier étage. Sur la canalisation 18 est placée une pompe (non représentée) qui assure l'écoulement de l'air au travers du dispositif. Chaque étage comporte en sa partie inférieure une encoche circulaire 21 dans laquelle s'emboîte l'embrèvement circulaire 7 usiné sur la partie supérieure de l'étage suivant. L'assemblage des étages s'effectue à l'aide d'un système du type serre-joint 24.

De simples joints toriques 16 assurent l'étanchéité entre les étages.

Dans un premier mode de réalisation de l'invention, la mise en rotation excentrée du disque de collection 1 par rapport à l'axe de la plaque percée 2 est réalisée par l'utilisation d'un jeu d'engrenages.

Chaque disque de collection 1 est fixé au moyen de vis 23 sur une plaque circulaire dentée 10 de plus grand diamètre caractérisée en ce qu'elle comporte sur sa face amont non recouverte par le disque des orifices d'évacuation 11 des particules d'un étage vers l'étage inférieur.

Chaque roue dentée 10 est montée dans une gorge circulaire 25 pratiquée à l'intérieur du corps cylindrique de l'échantillonneur. Elle engrène sur deux pignons 12a et 12b qui lui communiquent son mouvement de rotation excentré par rapport à l'axe de la plaque percée 2. Le pignon 12a, solidaire de l'extrémité inférieure d'une tige 13a entraînée en rotation par un moteur 14, transmet son mouvement de rotation au pignon 12b au moyen de deux ergots 15a, montés sur sa face externe, venant s'emboîter dans les deux orifices 15b situés sur la face externe du pignon 12b lequel est lui-même solidaire de l'extrémité supérieure d'une tige 13b, propre à l'étage consécutif 8b, coaxiale et identique à la tige 13a de l'étage précédent 8a. Ainsi, tous les disques de collection 1 tournent à une même vitesse autour d'un même axe 33 excentré par rapport à l'axe 30 de la plaque percée 2.

Ce mode d'exécution présente l'avantage d'avoir des étages facilement démontables car indépendants les uns des autres; selon l'utilisation, le nombre d'étages pourra être variable. D'autre part, un dispositif du même type aurait pu être envisagé pour la mise en rotation des plaques percées, les plaques de collection restant fixes.

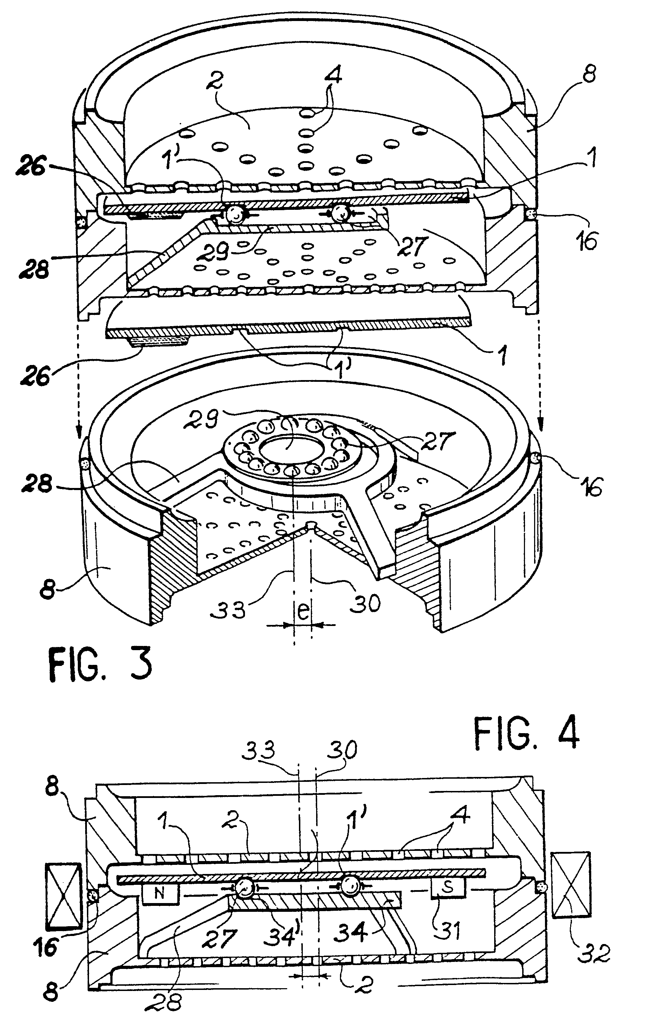

La figure 3 représente un second mode d'exécution de la mise en rotation des plaques de collection. Il consiste à utiliser une butée à billes 27 sur laquelle est monté le disque de collection 1, positionné grâce à une gorge 1', de telle sorte que le disque de collection 1 et la butée à billes 27 soient concentriques. La butée à billes 27 peut se déplacer latéralement à l'intérieur d'une coupelle 29 à fond plat. Le diamètre intérieur de la coupelle est égal au diamètre extérieur de la butée augmenté de deux fois l'excentrage désiré. La coupelle 29 est soutenue par un croisillon à trois branches 28 dont les extrémités s'appuient sur la plaque circulaire percée de trous 2 et contre la paroi de la chambre cylindrique creuse 8 de l'étage inférieur. La coupelle 29, la plaque percée 2 et la chambre 8 sont concentriques.

Le disque de collection 1 est lesté avec une masselotte 26 fixée à la périphérie de sa face inférieure. En inclinant légèrement le corps de l'impacteur 8, le disque de collection 1 se positionne de telle sorte que la masselotte 26 reste au point le plus bas, ce qui provoque l'excentrage désiré entre la plaque percée 2 et le disque 1. On entraîne alors en rotation le corps de l'impacteur par tout moyen connu, tel que moteur par exemple. Ce deuxième mode d'exécution est de réalisation plus simple, mais suppose la mise en rotation de l'ensemble du corps de l'impacteur, dont l'axe de révolution sera incliné par rapport à l'axe vertical.

La figure 4 représente un troisième mode d'exécution qui est une variante de la précédente. La butée à billes 27 pivote dans une gorge 34' taillée sur un support cylindrique plan 34 soutenu par un croisillon à trois branches 28 comme monté précédemment. La gorge 34' est taillée de sorte que l'axe de rotation 33 de la butée 27, donc de la plaque de collection 1, soit excentré par rapport à l'axe de symétrie 30 de l'ensemble de l'impacteur. Le disque de collection 1 préalablement aimanté par des masselottes magnétiques 31 fixées à deux extrémités diamétralement opposées est mis en rotation sous l'action d'un champ magnétique extérieur tournant créé par exemple par une bobine magnétique 32 située à l'extérieur de la chambre cylindrique 8.

Ce troisième mode d'exécution est aussi de réalisation plus simple que le premier mode, toutefois, il ne convient pas pour collecter des aérosols magnétiques. Il suppose aussi que les autres composants de l'impacteur soient non magnétiques comme c'est le cas avec l'impacteur commercialisé par le société ANDERSEN Samplers INC. en alliage d'aluminium.

Les deux derniers modes d'exécution sont préférés au premier car ils peuvent être mis en œuvre sur tout dispositif d'impaction en cascade du type de celui utilisé, sans autre modification que d'ajouter les éléments décrits, de sorte que l'impacteur peut être réutilisé dans sa version originale pour des usages courants ne nécessitant pas le dépôt uniforme que permet la présente invention.

Un dernier mode d'exécution consiste à utiliser l'écoulement d'air dans l'impacteur pour entraîner en rotation des disques excentrés munis d'aubages à leur périphérie.

L'utilisation de ces différents modes d'exécution qui permettent l'obtention d'un dépôt de particules homogène sur les disques de collection et l'utilisation maximale de ces mêmes disques peut être étendue aux applications connues de l'impacteur à cascades à savoir: la granulométrie d'aérosols radioactifs en vue d'analyse par comptage $\alpha$ ou spectrométrie $\alpha$ ($PuO_2$, poussière de minerai), d'aérosols de combustion à très forte concentration et d'aérosols en vue d'une analyse par gravimétrie, par microscopie, par fluorescence X, par analyse chimique.

## Revendications

1. Dispositif du type échantillonneur d'aérosols à impaction en cascade et à dépôt uniforme comportant un cône d'admission d'air à embase cylindrique (6) fixée sur une chambre cylindrique de révolution creuse et étanche constituée par la superposition de plusieurs étages en forme de cylindres de révolution creux (8) parcourus par le courant d'air issu du cône d'admission et comportant chacun une plaque circulaire (2) percée de trous (4) situés sur des cercles concentriques (5) coaxiaux à ladite plaque (2) et de diamètre identique diminuant progressivement à chaque étage, et un disque de collection (1) situé en aval de la plaque percée (2) de diamètre inférieur au diamètre interne de la chambre de l'impacteur, comportant des moyens pour assurer la circulation verticale descendante de l'air, caractérisé en ce qu'il comprend en outre des moyens pour mettre en rotation relative chaque plaque percée (2) par rapport au disque de collection (1) correspondant, et en ce qu'à chaque étage l'axe du disque (1) présente un excentrage par rapport à l'axe de la plaque circulaire percée (2).

2. Dispositif selon la revendication 1, caractérisé en ce que le disque de collection (1) excentré est fixé sur une plaque circulaire dentée (10) de diamètre supérieur au diamètre du disque de collection (1) comportant une évacuation de l'aérosol par des trous (11) percés dans la partie de la plaque (2) non recouverte par le disque de collection (1), montée dans une gorge circulaire (25) pratiquée à l'intérieur du corps cylindrique de l'étage impacteur engrenant sur deux pignons (12a et 12b) dont la premier (12a) solidaire de l'extrémité inférieure d'une tige (13a) entraînée en rotation par un moteur (14) transmet le mouvement de rotation au second (12b) au moyen de deux ergots (15a) montés sur sa face externe venant s'emboîter dans les deux orifices (15b) usinés sur la face externe du second pignon (12b) lui-même solidaire de l'extrémité supérieure d'une tige (13b), élément constitutif de l'étage consécutif (8b), coaxiale et identique à la tige (13a) de l'étage précédent (8a).

3. Dispositif selon la revendication 1, caractérié en ce que chaque disque de collection (1) est monté sur une butée à billes (27), mobile à l'intérieur d'une coupelle supportée par un croisillon à plusieurs branches (28) dont les extrémités sont emboîtées dans le corps cylindrique de l'impacteur (8).

4. Dispositif selon la revendication 3, caractérisé en ce que chaque disque de collection (1) est lesté avec une masselotte (26) fixée à la périphérie de sa face inférieure.

5. Procédé de mise en œuvre du dispositif selon la revendication 4, caractérisé en ce que chaque disque de collection (1) est excentré par rapport à l'axe de la plaque circulaire percée (2) par inclinaison de l'impacteur et mise en rotation de ce dernier.

6. Dispositif selon la revendication 1, caractérisé en ce que chaque disque de collection (1) est monté sur une butée à billes (27) excentrée pivotant sur un support (34) maintenu par un croisillon à plusieurs branches (28) dont les extrémités sont emboîtées dans le corps cylindrique de l'impacteur (8).

7. Dispositif selon la revendication 6, caractérisé en ce que chaque disque de collection (1) muni de masselottes magnétiques (31) fixées à deux extrémités diamétralement opposées du disque (1) ou à proximité de ces deux extrémités est entraîné en rotation autour de son axe (33) sous l'action d'un champ magnétique extérieur tournant créé par une bobine magnétique (32) située à l'extérieur de la chambre cylindrique de l'impacteur (8).

## Claims

1. Apparatus of the aerosol sampler type with cascade impaction and uniform deposition comprising an admission cone with a cylindrical base (6) fixed to a tight, hollow, cylindrical chamber of revolution constituted by the superimposing of several stages in the form of hollow cylinders of revolution (8) traversed by the air flow from the admission cone and each having a circular plate (2) perforated with holes (4) located on concentric circles (5) coaxial to said plate (2) and having an identical diameter progressively decreasing in each stage, as well as a collection disk (1) located downstream of the perforated plate (2) and whose diameter is smaller than the internal diameter of the impactor chamber, incorporating means for ensuring the vertical downward circulation of the air, characterized in that it also comprises means for the relative rotation of each perforated plate (2) with respect to the corresponding collection disk (1) and in that in each stage, the axis of the disk (1) has an offset relative to the axis of the circular perforated plate (2).

2. Apparatus according to claim 1, characterized in that the offset collection disk (1) is fixed to a circular toothed plate (10) having a diameter larger than the diameter of the collection disk (1), the aerosol being discharged by holes (11) made in that part of the plate (2) not covered by the collection disk (1) and mounted in a circular groove (25) made within the cylindrical body of the impactor stage engaging on two pinions (12a, 12b) whereof the first (12a) integral with the lower end of a rod (13a) rotated by a motor (14) transmits the rotary movement to the second (12b) by means of two lugs (15a), which are mounted on its outer face and which fit into two openings (15b) made on the outer face of the second pinion (12b), which is fixed to the upper end of a rod (13b), forming a component of the following stage (8b), which is coaxial and identical to the rod (13a) of the preceding stage (8a).

3. Apparatus according to claim 1, characterized in that each collection disk (1) is mounted on a thrust ball bearing (27), movable within a cap supported by a brace having a plurality of branches (28), whereof the ends are fitted into the cylindrical body of the impactor (8).

4. Apparatus according to claim 3, characterized in that each collection disk (1) is weighted by a counterweight (26) fixed to the periphery of its lower face.

5. Process for realizing the apparatus according to claim 4, characterized in that each collection disk (1) is offset relative to the axis of the perforation circular plate (2) by inclining and rotating the impactor.

6. Apparatus according to claim 1, characterized in that each collection disk (1) is mounted on an offset thrust ball bearing (27) pivoting on a support (34) held by a brace having several branches (28), whereof the ends are fitted into the cylindrical body of the impactor (8).

7. Apparatus according to claim 6, characterized in that each collection disk (1) provided with magnetic counterweights (31) fixed to two diametrically opposite ends of the disk (1) or in the vicinity thereof is rotated about its axis (33) under the action of a rotary external magnetic field produced by a magnetic coil (32) positioned outside the cylindrical chamber of the impactor (8).

## Patentansprüche

1. Aerosol-Probenentnahmevorrichtung mit mehrstufigem Impaktor und gleichmäßigem Niederschlag, enthaltend einen Lufteintrittskonus mit zylindrischem Unterteil (6), der auf einer hohlen und dichten Drehzylinderkammer befestigt ist, die durch Übereinandersetzung mehrerer Etagen in Form von hohlen Drehzylindern (8) gebildet ist, die von der von dem Einlaßkonus abgegebenen Luftströmung durchströmt sind und die jeweils eine kreisförmige Scheibe (2) enthalten, die von Löchern (4) durchsetzt ist, die auf konzentrischen, zur genannten Scheibe (2) koaxialen Kreisen (5) liegen und gleichen Durchmesser haben, der progressiv mit jeder Etage abnimmt, und eine Auffangplatte (1), die stromabwärts der Lochscheibe (2) angeordnet ist und einen Durchmesser aufweist, der kleiner als der Innendurchmesser der Impaktorkammer ist, enthaltend Einrichtungen, die eine vertikale, absteigende Zirkulation der Luft sicherstellen, dadurch gekennzeichnet, daß sie weiterhin Einrichtungen enthält, die jede Lochscheibe (2) gegenüber der entsprechenden Auffangplatte (1) in Drehung versetzen, und daß in jeder Etage die Achse der Platte (1) eine Exzentrizität gegenüber der Achse der kreisförmigen Lochscheibe (2) aufweist.

2. Vorrichtung nach Anspruch 1, dadurch gekennzeichnet, daß die exzentrische Auffangplatte (1) auf einer kreisförmigen Zahnscheibe (10) befestigt ist, deren Durchmesser größer als der Durchmesser der Sammelplatte (1) ist und einen Auslaß für Aerosol durch Löcher (11) aufweist, die in dem Teil der Platte (10) ausgebildet sind, der nicht von der Auffangplatte (1) bedeckt ist, gehalten in einer kreisförmigen Kehle (25), die im inneren des zylindrischen Körpers der Impaktoretage ausgebildet ist, und in die zwei Zahnräder (12a und 12b) eingreifen, von denen das erste (12a) fest mit dem unteren Ende einer Stange (13a) verbunden ist, die von einem Motor (14) in Drehung versetzt ist, und das die Drehbewegung auf das zweite (12b) mittels zweier Vorsprünge (15a) überträgt, die an seiner Außenseite befestigt sind und in die zwei Öffnungen (15b) eingreifen, die in der Außenseite des zweiten Zahnrads (12b) ausgebildet sind, das selbst mit dem oberen Ende einer Stange (13b) fest verbunden ist, das das Folgeelement der nachfolgenden Etage (8b) bildet und koaxial und identisch zu der Stange (13a) der vorausgehenden Etage (8a) ist.

3. Vorrichtung nach Anspruch 1, dadurch gekennzeichnet, daß jede Auffangplatte (1) auf Kugellagern (27) gelagert ist, beweglich im inneren einer Schale, die von dem Armkreuz mit mehreren Armen (28) abgestützt ist, deren Enden in dem zylindrischen Körper des Impaktors (8) sitzen.

4. Vorrichtung nach Anspruch 3, dadurch gekennzeichnet, daß jede Auffangplatte (1) mit einem Anguß (26) versehen ist, der am Umfang seiner Unterseite befestigt ist.

5. Verfahren zum Ausführen der Vorrichtung nach Anspruch 4, dadurch gekennzeichnet, daß jede Auffangplatte (1) gegenüber der Achse der kreisförmigen Lochscheibe (2) durch Neigung des Impaktors und durch Indrehungsversetzen desselben exzentriert wird.

6. Vorrichtung nach Anspruch 1, dadurch gekennzeichnet, daß jede Auffangplatte (1) auf einem exzentrischen Kugellager (27) montiert ist, das aus einem Träger (34) schwenkt, der von einem Armkreuz mit mehreren Armen (28) abgestützt ist, deren Enden in dem zylindrischen Körper des Impaktors (8) sitzen.

7. Vorrichtung nach Anspruch 6, dadurch gekennzeichnet, daß jede Auffangplatte (1) mit magnetischen Ansätzen (31) versehen ist, die an zwei diametral gegenüberliegenden Abschnitten der Platte (1) oder in der Nähe dieser zwei Abschnitte befestigt sind, und daß sie um ihre Achse (33) unter der Wirkung eines äußeren magnetischen Drehfeldes in Drehung versetzt ist, das von einer Magnetspule (32) erzeugt wird, die außerhalb der zylindrischen Kammer des Impaktors (8) angeordnet ist.

FIG. 1a

FIG. 1b

# FIG. 2

FIG. 3

FIG. 4